# FASCICULE DE BREVET EUROPEEN

(11) **EP 2 296 456 B1**
(45) Date de publication et mention de la délivrance du brevet: **28.03.2012**
(21) Numéro de dépôt: 09757699.5
(22) Date de dépôt: 04.06.2009
(51) Int. Cl.: A01G 17/06, A01G 17/08

(54) **AGRAFE DE PALISSAGE DESTINEE A UNE POSE MECANISEE**
SPALIERKLAMMER FÜR EINE MECHANISCHE INSTALLATION
TYING CLIP FOR MECHANIZED INSTALLATION

(30) Priorité: 05.06.2008 FR 0803125
(43) Date de publication de la demande: 23.03.2011
(73) Titulaire: Gautherot, Philippe, 10110 Buxières sur Arce (FR)
(72) Inventeur: Gautherot, Philippe, 10110 Buxières sur Arce (FR)
(74) Mandataire: Oudin, Stéphane
(86) Numéro de dépôt international: PCT/FR2009/000654
(87) Numéro de publication internationale: WO 2009/147323

(56) Documents cités:
- FR-A- 2 318 578
- FR-A- 2 750 290
- FR-A- 2 908 959

## Description

La présente invention concerne une agrafe qui est utilisée pour le maintien, rapprochés l'un de l'autre, de deux fils tendus, notamment pour le palissage de la vigne, et un dispositif de pose de celles-ci.

Dans de nombreuses applications il est nécessaire de maintenir, à proximité l'un de l'autre, deux fils tendus qui sont soumis à des forces transversales respectives tendant à les écarter mutuellement l'un de l'autre. L'une de ces applications est le palissage de la vigne où les forces tendant à écarter les deux fils l'un de l'autre sont créées par la végétation palissée, serrée entre les deux fils.

Dans le domaine des agrafes de palissage de vigne, on connaît déjà une agrafe, comme celle décrite dans le brevet FR 2 750 290 délivré au nom du Demandeur. Ladite agrafe, qui a une forme sensiblement rectangulaire ou carrée délimitée par une paire de côtés longitudinaux et une paire de côtés transversaux, présente une fente d'introduction et d'accrochage des fils, s'étendant à partir d'un premier côté longitudinal de l'agrafe jusqu'à la partie centrale de celle-ci. Cette fente qui a une forme générale en zigzag, possède une première extrémité contre laquelle vient s'appliquer, sous pression, le premier fil, c'est-à-dire le fil le plus proche de l'agrafe, après la pose de cette agrafe, et une seconde extrémité, plus proche du premier côté transversal que la première extrémité, contre laquelle visent s'appliquer sous pression le second fil, après la pose de l'agrafe. En outre, lesdits côtés longitudinaux assurent le guidage de l'agrafe dans un couloir de distribution d'un dispositif de pose, et lesdits côtés transversaux sont respectivement reliés, par l'intermédiaire de pattes de liaison arrachables, à des agrafes voisines dans une bande continue d'agrafes successives. Par conséquent, lesdites agrafes sont produites à partir de rouleaux de matière qu'on découpe partiellement pour obtenir cette bande continue d'agrafes successives reliées par l'intermédiaire des ces pattes de liaison arrachables. Toutefois, cette fabrication est difficile à maîtriser et à industrialiser à grande échelle car elle génère beaucoup de déchets.

On connaît aussi des agrafes de palissage qui sont assemblées les unes aux autres pour former soit un rouleau continu, soit une barrette en ajoutant un liant entre chaque agrafe. Le liant peut être par exemple de la colle. Si ce système est fiable, il est toutefois coûteux à mettre en oeuvre et fait intervenir un matériau autre que celui de l'agrafe, ce qui peut entraîner des problèmes de pollution de la récolte et des sols.

L'invention permet de pallier ces différents inconvénients en proposant une agrafe transversale de maintien de deux fils tendus qui offre l'avantage d'être simple, écologique, efficace, fiable et bon marché et qui se prête particulièrement bien à une pose automatique.

A cet égard, l'invention a pour objet une agrafe pour le maintien, rapprochés l'un de l'autre, de deux fils tendus soumis à des forces transversales respectives tendant à les écarter l'un de l'autre, notamment pour le palissage de la vigne, présentant une forme sensiblement parallélépipédique délimitée par une paire de faces verticales sensiblement parallèles reliées par une paire de faces longitudinales verticales et une paire de faces transversales horizontales, lesdites faces longitudinales assurant avantageusement et le cas échéant, le guidage de l'agrafe dans le sens longitudinal d'un couloir de distribution d'un dispositif de pose de l'agrafe, chaque agrafe présentant une fente d'introduction et d'accrochage des fils, s'étendant à partir d'une des faces longitudinale de l'agrafe jusqu'à une section interne débouchant sur chacune des faces verticales et située dans la partie centrale de ladite agrafe, cette section interne ayant une première extrémité et une seconde extrémité contre lesquelles viennent respectivement s'appliquer sous pression après la pose de l'agrafe, le premier fil, qui est le plus proche de l'agrafe, et le second fil. Ladite agrafe est remarquable en ce qu'elle comporte au moins un moyen de fixation femelle disposé sur l'une des deux faces verticales et au moins un moyen de fixation mâle sectionnable disposé sur l'autre face verticale en vis-à-vis dudit moyen de fixation femelle, ledit moyen de fixation femelle étant indifféremment disposé sur l'une ou l'autre des faces verticales, lesdits moyens de fixation femelle et mâle étant de forme complémentaire et aptes à coopérer respectivement avec les moyens de fixation mâle et femelle d'agrafes identiques pour les lier entre elles par coincement afin de former un barreau continu d'agrafes successives.

L'invention a également pour objet un dispositif de pose des agrafes comportant un couloir de distribution situé sur le côté des deux fils dans un plan transversal parallèle aux deux fils et délimité par deux rails longitudinaux, une roue d'entraînement par adhérence, pour l'entraînement intermittent de la bande d'agrafes, disposée transversalement par rapport au couloir de distribution, un poste de détachement et de poussée transversale des agrafes vers les fils situé sous l'extrémité du couloir de distribution, comportant un poussoir à mouvement alternatif et couplé mécaniquement à la dite roue de manière à amener une nouvelle agrafe au poste après le retour en arrière du poussoir, et à actionner le poussoir pour assurer la pose de l'agrafe après arrêt de la roue, caractérisé en ce que les agrafes, qui sont fixées entre elles par au moins un moyen de fixation mâle et un moyen de fixation femelle associé, forment un barreau d'agrafes successives glissant contre lesdits rails, et en ce que, lors de la pose de l'agrafe, le poussoir appuie sur ladite agrafe et la détache du barreau en sectionnant le moyen mâle à sa base.

On décrira ci-après, à titre d'exemple non limitatif, une forme d'exécution de la présente invention, en référence au dessin annexé sur lequel :
- la figure 1 est une vue de face d'une agrafe suivant la présente invention, disposée latéralement par rapport à deux fils tendus et avant sa pose sur les deux fils,
- la figure 2 est une coupe verticale d'une agrafe suivant l'axe II-II de la figure 1,
- la figure 3 est une vue en élévation de l'agrafe une fois posée sur les deux fils.
- la figure 4 est une vue en élévation schématique partielle d'un dispositif de pose des agrafes.
- la figure 5 est un schéma du dispositif de pose des agrafes.

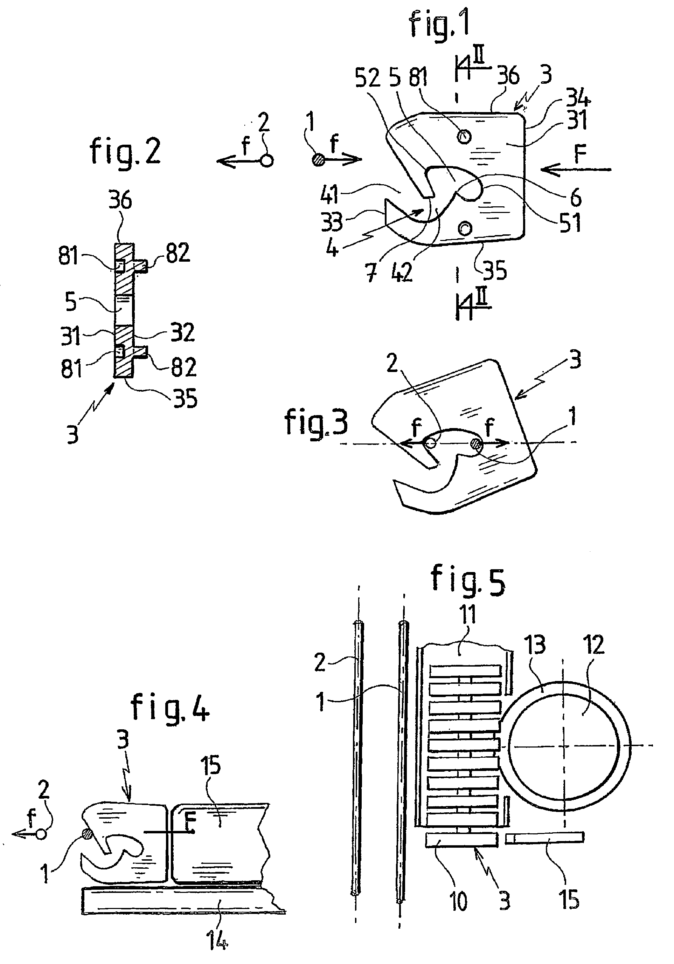

Sur la figure 1 sont représentés, en coupe transversale, deux fils parallèles tendus 1, 2 qui sont soumis à des forces transversales f tendant à les écarter l'un de l'autre, c'est-à-dire une force f sollicitant le fil droit 1 vers la droite et une force f sollicitant le fil gauche 2 vers la gauche. Ces forces sont créées, par exemple, par la végétation palissée dans le cas où les fils 1, 2 sont utilisés pour le palissage de la vigne.

L'agrafe 3 suivant la présente invention est représentée dans une position latérale par rapport aux deux fils 1, 2 et avant sa pose sur ces fils qui a lieu sous l'effet d'une force transversale F dirigée en direction des deux fils 1, 2, comme il sera précisé plus loin.

Conformément aux figures 1 et 2, l'agrafe 3 a une forme sensiblement parallélépipédique délimitée par une paire de faces verticales sensiblement parallèles 31, 32 reliées par une paire de faces longitudinales 33, 34 verticales et une paire de faces transversales 35, 36 horizontales. Lesdites faces longitudinales 33, 34 assurant avantageusement le guidage de l'agrafe dans le sens longitudinal d'un couloir de distribution d'un dispositif de pose de l'agrafe, comme cela sera décrit plus loin. Ainsi, la première face longitudinale 33 est séparée en deux segments par une fente 4 d'introduction des fils 1, 2 s'étendant à partir de ladite première face longitudinale 33 jusqu'à une section interne 5 débouchant sur chacune des faces verticales 31, 32 et située dans la partie centrale de ladite agrafe 3 tandis la deuxième face longitudinale 34 de l'agrafe s'étend sur la totalité de la longueur de cette agrafe. La fente 4 et la section interne 5 dans lesquelles doivent être introduits les fils 1, 2, comme il sera décrit d'une façon détaillée plus loin, a une forme générale en zigzag. Ainsi, la fente 4 comprend successivement, à partir de la face première face longitudinale 33 et vers l'intérieur de l'agrafe 3, une section d'entrée 41 inclinée vers le bas par rapport à ladite face première face longitudinale 33 et une section intermédiaire 42 inclinée vers le haut reliant la section interne 5 inclinée vers le bas mais d'un angle moindre que celui de la section d'entrée 41. A l'endroit où la section intermédiaire 42 se raccorde à la section interne 5, ces deux sections délimitent, par leurs bords inférieurs, un rebord saillant 6 dirigé vers le haut.

La section interne 5 présente des première et deuxième extrémités arrondies 51, 52. Les premières et deuxièmes extrémités 51, 52 sont respectivement situées du coté de la deuxième face longitudinale 34 et de la première face longitudinale 33. En outre, la deuxième extrémité 52 est plus près de la première face longitudinale 33 que l'endroit où la section intermédiaire 42 se raccorde à la section interne 5, et présente une plus grande largeur que la première extrémité 51. De plus, la section interne 5 délimite, conjointement avec les bords supérieurs de la section d'entrée 41 et de la section intermédiaire 42 un bec 7 incliné vers le bas et vers l'intérieur, en direction du bord inférieur opposé de la section intermédiaire 42.

L'agrafe 3 présente sur sa première face verticale 31 deux moyens de fixation femelles 81 situés au voisinage du milieu des parties haute et basse de ladite première face verticale 31 et sur sa deuxième face verticale 32, deux moyens de fixation mâles 82 situés en vis-à-vis desdits moyens de fixation femelles 81. Lesdits moyens de fixation femelles et mâles 81, 82 sont destinés au rattachement de l'agrafe 3 à des agrafes identiques voisines dans un barreau d'agrafes successives comme il sera décrit d'une façon plus détaillée plus loin.

De préférence, les deux moyens de fixation femelles 81 sont des mortaises globalement cylindriques non débouchantes et les moyens de fixation mâles 82 sont des tenons globalement cylindriques, qui ont une forme complémentaire à celle des mortaises cylindriques afin de pouvoir insérer les tenons de l'agrafe 3 dans les mortaises d'une agrafe voisine et réciproquement insérer les tenons d'une agrafe voisine dans les mortaises de l'agrafe 3, afin d'assurer le rattachement de l'agrafe 3 à des agrafes identiques voisines par coincement des tenons dans les mortaises.

De plus, les moyens de fixation femelles et mâles 81,82 doivent être suffisamment résistants pour assurer la stabilité et la solidité du barreau d'agrafes et doivent garantir un espacement suffisant entre lesdites agrafes 3 pour permettre l'avancement pas à pas du barreau d'agrafes lors de la pose des agrafes. Lesdits moyens de fixation femelles et mâles 81, 82 doivent toutefois être assez fragiles pour se rompre facilement lorsqu'une agrafe 3 est soumise à une poussée transversale, au moment de sa pose sur les fils 1, 2.

L'Homme du Métier n'aura aucune difficulté à déterminer en fonction du matériau utilisé pour fabriquer l'agrafe 3 les dimensions des moyens de fixation femelles et mâles 81, 82 afin d'obtenir la fixation par coincement, la résistance, la capacité à permettre un espacement entre les agrafes et la sectionnabilité décrites ci-dessus.

Il va de soi que l'on pourra modifier le nombre et la section des moyens de fixation femelles et mâles 81, 82 sans sortir du cadre de la présente invention. Ainsi, on pourra concevoir une agrafe 3 avec un seul moyen de fixation femelle 81 et un seul moyen de fixation mâle 82. Lesdits moyens de fixation femelle et mâle 81, 82, qui seront alors situés le plus près possible du milieu des faces verticales 31, 32, pourront également avoir une section autre que circulaire par exemple polygonale telle qu'un triangle ou un carré.

De même, on pourra sur une même face verticale de l'agrafe 3 prévoir à la fois des moyens de fixation femelles et mâles 81, 82 sans sortir du cadre de la présente invention.

Toutefois, pour avoir une bonne stabilité du barreau d'agrafes avec une section minimale et une facilité de fabrication, il est préférable d'avoir deux moyens de fixation femelles 81 et deux moyens de fixation mâles 82 de section globalement circulaire. Avec cette configuration, les agrafes peuvent être réalisées de façon simple, par moulage par injection par exemple, à grande échelle et ensuite liées facilement les unes aux autres pour constituer un barreau d'agrafes 3. Le cas échéant, on pourra désolidariser des agrafes 3 dudit barreau car cette conception n'utilise pas de liant de type colle.

Compte tenu de ce qui précède, l'agrafe 3 est de préférence réalisée en matière plastique.

On décrira maintenant la façon dont se déroule la pose de l'agrafe 3 sur les deux fils 1, 2. A cet effet, l'agrafe 3 est poussée fente 4 en avant, sous l'action de la force transversale et horizontale F, en direction des fils 1, 2, qui viennent alors s'engager dans ladite fente 4. Les fils 1, 2, rencontrent successivement le bord supérieur de la section d'entrée 41, puis sont guidés vers le bas jusqu'au début de la section intermédiaire 42. Les fils 1 et 2 glissent alors respectivement sur le bord supérieur et inférieur de la section intermédiaire 42 pour pénétrer dans la section interne 5. Le fil 1 vient en contact avec le bord supérieur de la section interne 5, à l'endroit de la partie pointue 6 pour aboutir finalement à sa position finale à l'endroit de la première extrémité 51 de la section interne 5, position dans laquelle il est maintenu par la force transversale f. Le fil 2 vient finalement se placer en butée contre la seconde extrémité 52 de la section interne 5, position dans laquelle il est maintenu sous l'action de la force transversale f vers la première face longitudinale 33.

Jusque là, l'agrafe 3, qui est poussée vers les fils 1, 2, impose auxdits fils son mouvement et dès qu'elle est libérée, les fils 1, 2 lui imposent sa position finale dans l'espace car ils sont soumis aux forces f créées par la végétation. L'agrafe 3 prend alors la position représentée sur la figure 3 dans laquelle les deux fils 1, 2 sont situés dans un même plan horizontal et en appui sous pression contre les deux extrémités 51, 52 de la section interne 5, et l'agrafe 3 s'incline de haut en bas et de la gauche vers la droite, pour suivre le mouvement horizontal naturel de la nappe de fils 1, 2.

Les figures 4 et 5 illustrent schématiquement un dispositif 9 de pose des agrafes utilisé pour la distribution et la pose des agrafes 3 sur les fils 1, 2. Ainsi qu'il a été indiqué, précédemment, les agrafes 3 sont utilisées sous la forme d'un barreau 10 d'agrafes 3 attachées entre elles par leurs moyens de fixation femelle et mâle 81, 82. Le barreau 10 d'agrafes 3 est ensuite guidé dans un couloir de distribution 11, situé sur le côté des deux fils 1, 2 dans un plan transversal parallèle aux deux fils 1, 2. Ce couloir 11 est délimité par deux rails longitudinaux contre lesquels glissent les faces longitudinales 33, 34 des agrafes 3. L'entraînement du barreau 10 d'agrafes 3 dans le couloir de distribution 11 est effectué par une roue 12 d'entraînement qui est disposée transversalement par rapport au couloir de distribution 11 et dont la surface externe comporte un revêtement adhérent 13 suffisamment déformable et élastique pour pouvoir, d'une part, adhérer à la paroi du barreau 10 avec laquelle il est en contact et, d'autre part, s'engager partiellement dans les intervalles délimités entre les faces verticales des agrafes 3 successives puis reprendre sa forme initiale afin de ne pas entraver le bon fonctionnement du dispositif 9, comme on peut le voir sur la figure 4. Le mouvement de rotation pas à pas de la roue 12 provoque donc, par l'intermédiaire de son revêtement 13, une poussée des agrafes 3 vers l'avant du couloir de distribution 11 en direction d'un poste 14 de détachement et de poussée transversale des agrafes 3 vers les fils 1, 2 situé sous l'extrémité du couloir de distribution 11. L'agrafe 3, qui est située à l'extrémité du barreau 10, se trouve audit poste dégagée du couloir de distribution 11 et peut alors être soumise à une poussée transversale F horizontale en direction des fils 1, 2, sous l'action d'un poussoir 15 à mouvement alternatif.

Le poussoir 15 applique donc sur ladite agrafe 3 une poussée transversale F suffisante pour rompre les tenons 82 qui la maintiennent attachée à l'agrafe 3 immédiatement derrière elle et se trouvant encore dans le couloir de distribution 11.

Ce type de fixation entre les différentes agrafes 3 constituant le barreau 10 est tel que lors de la pose de l'agrafe 3 la partie cassée des tenons 82 reste dans les mortaises 81 cylindriques évitant ainsi l'encrassement du dispositif 9 et la pollution du sol.

L'agrafe 3 peut être alors engagée sur les fils 1, 2, comme il a été indiqué précédemment, jusqu'à ce que ces fils 1, 2 viennent s'accrocher dans la section interne 5, en étant respectivement en appui contre ses deux extrémités 51, 52.

Afin de synchroniser le mouvement du poussoir 15 et l'avancée du barreau 10, le dispositif 9 comporte également un mécanisme d'entraînement approprié (non représenté) qui commande le mouvement intermittent de la roue 12 et celui du poussoir 15 de manière à les entraîner successivement. Autrement dit, la roue 12 est entraînée en rotation pour amener une nouvelle agrafe 3 au poste 14, après retour en arrière du poussoir 15, et une fois la nouvelle agrafe placée au poste 14, la roue 12 est arrêtée et le poussoir 15 est actionné pour assurer la pose de l'agrafe.

Bien que, dans la description qui précède, il ait été indiqué que la section d'entrée 41 de la fente 4 de l'agrafe 3 soit inclinée vers le bas, il va de soi que l'agrafe pourrait aussi être présentée dans une position symétrique de la précédente par rapport à un axe horizontal, c'est-à dire avec la section d'entrée 41 de la fente 4 s'étendant vers le haut.

De même, si la description qui précède définit une agrafe 3 avec une fente 4 et une section interne 5 ayant une forme générale en zigzag, il va de soi que les moyens de fixation (81, 82) des agrafes 3 pour former un barreau d'agrafes successives sont adaptables à tout type d'agrafes quelque soit la forme de leur fente 4 et leur section interne 5.

Par ailleurs, au lieu d'avoir une forme sensiblement rectangulaire, l'agrafe 3 pourrait avoir également une forme pratiquement carrée, ou même ronde ou elliptique sans pour autant sortir du cadre de l'invention.

## Revendications

1. Agrafe (3) pour le maintien, rapprochés l'un de l'autre, de deux fils (1, 2) tendus soumis à des forces transversales respectives tendant à les écarter l'un de l'autre, notamment pour le palissage de la vigne, présentant une forme sensiblement parallélépipédique délimitée par une paire de faces verticales (31, 32) sensiblement parallèles reliées par une paire de faces longitudinales (33, 34) verticales et une paire de faces transversales (35, 36) horizontales, lesdites faces longitudinales (33, 34) assurant avantageusement et le cas échéant, le guidage de l'agrafe (3) dans le sens longitudinal d'un couloir de distribution (11) d'un dispositif (9) de pose de l'agrafe, chaque agrafe (3) présentant une fente (4) d'introduction et d'accrochage des fils (1, 2), s'étendant à partir d'une des faces longitudinales (33, 34) de l'agrafe (3) jusqu'à une section interne (5) débouchant sur chacune des faces verticales (31, 32) et située dans la partie centrale de ladite agrafe (3), cette section interne (5) ayant une première extrémité (5a) et une seconde extrémité (5b) contre lesquelles viennent respectivement s'appliquer sous pression après la pose de l'agrafe (3), le premier fil (1), qui est le plus proche de l'agrafe, et le second fil (2), **caractérisée en ce qu'**elle comporte au moins un moyen de fixation femelle (81) disposé sur l'une des deux faces verticales (31, 32) et au moins un moyen de fixation mâle (82) sectionnable disposé sur l'autre face verticale (31, 32) en vis-à-vis dudit moyen de fixation femelle (81), ledit moyen de fixation femelle (81) étant indifféremment disposé sur l'une ou l'autre des faces verticales (31, 32), lesdits moyens de fixation femelle (81) et mâle (82) étant de forme complémentaire et aptes à coopérer respectivement avec les moyens de fixation mâle (82) et femelle (81) d'agrafes identiques pour les lier entre elles par coincement afin de former un barreau (10) continu d'agrafes successives.

2. Agrafe suivant la revendication 1, **caractérisée en ce que** le moyen de fixation femelle (81) est une mortaise et le moyen de fixation mâle (82) est un tenon.

3. Agrafe suivant la revendication précédente, **caractérisée en ce que** la mortaise (81) et le tenon (82) sont de forme globalement cylindrique.

4. Agrafe suivant l'une quelconque des revendications précédentes, **caractérisée en ce qu'**elle deux moyens de fixation femelles (81) disposés sur une des deux faces verticales (31, 32) et deux moyens de fixation mâles (82) disposés sur l'autre face verticale (31, 32).

5. Dispositif (9) de pose d'agrafes suivant l'une quelconque des revendications 1 à 4 comportant un couloir de distribution (11) situé sur le côté des deux fils (1, 2) dans un plan transversal parallèle à coté des deux fils (1, 2) et délimité par deux rails longitudinaux, une roue (12) d'entraînement par adhérence, pour l'entraînement intermittent des agrafes (3), disposée transversalement par rapport au couloir de distribution (11), un poste (14) de détachement et de poussée transversale des agrafes (3) vers les fils (1, 2) situé sous l'extrémité du couloir de distribution (11), comportant un poussoir (15) à mouvement alternatif et couplé mécaniquement à la dite roue (12) de manière à amener une nouvelle agrafe (3) au poste (14) après le retour en arrière du poussoir (15), et à actionner le poussoir (15) pour assurer la pose de l'agrafe (3) après arrêt de la roue (12), **caracterisé en ce que** les agrafes (3) sont fixées entre elles par au moins un moyen femelle (81) et au moins un moyen mâle (82) associé pour former un barreau (10) d'agrafes successives glissant contre lesdits rails longitudinaux du couloir de distribution (11), et **en ce que** lors de la pose de l'agrafe (3) le poussoir (15) appuie sur ladite agrafe (3) et la détache du barreau (10) en sectionnant le moyen mâle (82) à sa base.

6. Dispositif (9) de pose d'agrafes suivant la revendication précédente, **caractérisé en ce que** lors de la pose de l'agrafe (3) la partie sectionnée du moyen de fixation mâle (82) reste dans le moyen de fixation femelle (81).

## Claims

1. Clip (3) for supporting, brought close together, two taut wires (1, 2) subjected to respective transversal forces tending to separate them, in particular for vine tying, having a substantially parallelepiped shape defined by a pair of substantially parallel vertical surfaces (31, 32) connected by a pair of vertical longitudinal surfaces (33, 34) and a pair of horizontal transverse surfaces (35, 36), said longitudinal surfaces (33, 34) providing advantageously and where applicable, the guiding of the clip (3) in the longitudinal direction of a distribution channel (11) of a device (9) for installing the clip, each clip (3) having a wire (1, 2) insertion and catching cleft (4), extending from one of the longitudinal surfaces (33, 34) of the clip (3) to an inner section (5) opening onto each of the vertical surfaces (31, 32) and located in the central portion of said clip (3), this inner section (5) having a first end (5a) and a second end (5b) against which respectively press under pressure after the installation of the clip (3), the first wire (1), which is the closest to the clip, and the second wire (2), **characterised in that** it comprises at least one female fastening means (81) placed on one of the two vertical surfaces (31, 32) and at least one dividable male fastening means (82) placed on the other vertical surface (31, 32) facing said female fastening means (81), said female fastening means (81) being indifferently placed on one or the other of the vertical surfaces (31, 32), said female fastening means (81) and male fastening means (82) being of complementary shape and able to cooperate respectively with the male fastening means (82) and female fastening means (81) of identical clips to connect them together by wedging in order to form a continuous rung (10) of successive clips.

2. Clip according to claim 1, **characterised in that** the female fastening means (81) is a mortise and the male fastening means (82) is a tenon.

3. Clip according to the preceding claim, **characterised in that** the mortise (81) and the tenon (82) are of globally cylindrical shape.

4. Clip according to any of the preceding claims, **characterised in that** it comprises two female fastening means (81) placed on one of the two vertical surfaces (31, 32) and two male fastening means (82) placed on the other vertical surface (31, 32).

5. Device (9) for installing clips according to any of claims 1 to 4 comprising a distribution channel (11) located on the side of the two wires (1, 2) in a transversal parallel plane next to two wires (1, 2) and defined by two longitudinal rails, a drive wheel (12) via adherence, for the intermittent driving of the clips (3), placed transversally in relation to the distribution channel (11), a post (14) for detaching and for transversal thrust of the clips (3) towards the wires (1, 2) located under the end of the distribution channel (11), comprising a pusher (15) with alternating movement and coupled mechanically to said wheel (12) in such a way as to bring another clip (3) to the post (14) after the backward return of the pusher (15), and to actuate the pusher (15) in order to provide for the installation of the clip (3) after stopping of the wheel (12), **characterised in that** the clips (3) are fastened together by at least one female means (81) and at least one male means (82) associated to form a rung (10) of successive clips sliding against said longitudinal rails of the distribution channel (11), and **in that** during the installation of the clip (3) the pusher (15) presses on said clip (3) and detaches it from the rung (10) by dividing the male means (82) at its base.

6. Device (9) for installing clips according to the preceding claim, **characterised in that** during the installation of the clip (3) the divided portion of the male fastening means (82) remains in the female fastening means (81).

## Patentansprüche

1. Klammer (3) zum Halten von zwei aneinander angenäherten gespannten Drähten (1, 2), die entsprechenden Querkräften unterzogen sind, die dazu neigen, sie von einander zu entfernen, insbesondere für die Spalierbindung der Weinrebe, aufweisend eine im Wesentlichen parallelepipede Form, die von einem Paar vertikaler, im Wesentlichen paralleler Seiten (31, 32) begrenzt ist, verbunden durch ein Paar vertikaler Längsseiten (33, 34) und ein Paar horizontaler Querseiten (35, 36), wobei die Längsseiten (33, 34) vorteilhafterweise und gegebenenfalls die Führung der Klammer (3) in der Längsrichtung eines Verteilungskanals (11) einer Vorrichtung (9) zur Installation der Klammer sicherstellen, wobei jede Klammer (3) einen Schlitz (4) zur Einführung und zur Verankerung des Drähte (1, 2) aufweist, die sich von einer der Längsseiten (33, 34) der Klammer (3) bis zu einem internen Abschnitt (5) erstrecken, der auf jede der vertikalen Seiten (31, 32) mündet und sich im zentralen Teil der Klammer (3) befindet, wobei dieser interne Abschnitt (5) ein erstes Ende (5a) und ein zweites Ende (5b) aufweist, gegen die jeweils unter Druck nach der Installation der Klammer (3) der erste Draht (1), der Klammer am nächsten ist, und der zweite Draht (2) angebracht werden, **dadurch gekennzeichnet, dass** sie mindestens ein weibliches Befestigungsmittel (81) aufweist, das auf einer der zwei vertikalen Seiten (31, 32) angebracht ist, und mindestens ein männliches Befestigungsmittel (82), das trennbar auf der anderen vertikalen Seite (31, 32) und gegenüber dem weiblichen Befestigungsmittel (81) angebracht ist, wobei das weibliche Befestigungsmittel (81) unterschiedslos auf der einen oder der anderen der vertikalen Seiten (31, 32) angeordnet ist, wobei die weiblichen (81) und männlichen (82) Befestigungsmittel eine komplementäre Form aufweisen und dazu ausgelegt sind, jeweils mit den identischen männlichen (82) und weiblichen (81) Befestigungsmitteln von Klammern zusammenzuarbeiten, um sie untereinander durch Klemmen zu verbinden, um eine kontinuierliche Sprosse (10) von aufeinander folgenden Klammern zu bilden.

2. Klammer nach Anspruch 1, **dadurch gekennzeichnet, dass** das weiblichen Befestigungsmittel (81) ein Schlitz und das männliche Befestigungsmittel (82) ein Zapfen ist.

3. Klammer nach dem vorhergehenden Anspruch, **dadurch gekennzeichnet, dass** der Schlitz (81) und der Zapfen (82) eine im Wesentlichen zylindrische Form aufweisen.

4. Klammer nach einem der vorhergehenden Ansprüche, **dadurch gekennzeichnet, dass** sie zwei weibliche Befestigungsmittel (81) aufweist, die auf einem der zwei vertikalen Seiten (31, 32) angebracht sind, und zwei männliche Befestigungsmittel (82), die auf der anderen vertikalen Seite (31, 32) angebracht sind.

5. Vorrichtung (9) zur Installation von Klammern nach einem der Ansprüche 1 bis 4, umfassend einen Verteilungskanal (11), der sich auf der Seite der zwei Drähte (1, 2) auf einer parallelen Querebene an der Seite der zwei Drähte (1, 2) befindet und von zwei Längsschienen begrenzt ist, ein Rad (12) zur Mitführung durch Haftung zur intermittierenden Mitführung der Klammern (3), quer bezüglich dem Verteilungskanal (11) angebracht, einen Pfosten (14) zur Trennung und zum Querschub der Klammern (3) auf die Drähte (1, 2) hin, angebracht unter dem Ende des Vereilungskanals (11), umfassend einen Mitnehmer (15) mit alternativer Bewegung und mechanisch verbunden mit dem Rad (12), um nach der Rückkehr des Mitnehmer (15) nach hinten eine neue Klammer (3) zum Pfosten (14) zu bringen und den Mitnehmer (15) zu betätigen, um die Installation der Klammer (3) nach dem Stopp der Rades (12) sicherzustellen, **dadurch gekennzeichnet, dass** die Klammern (3) untereinander durch mindestens ein weibliches Mittel (81) und mindestens ein männliches Mittel (82) befestigt sind, verbunden, um eine Sprosse (10) von aufeinander folgenden Klammern zu bilden, die gegen die Längsschienen des Verteilungskanals (11) gleiten, und dadurch, dass sich bei der Installation der Klammer (3) der Mitnehmer (15) gegen die Klammer (3) stützt und sie von der Sprosse (10) entfernt, indem das männliche Mittel (82) an seiner Basis getrennt wird.

6. Vorrichtung (9) zur Installation von Klammern nach dem vorhergehenden Anspruch, **dadurch gekennzeichnet, dass** bei der Installation der Klammer (3) der vom männlichen Befestigungsmittel (82) getrennte Teil im weiblichen Befestigungsmittel (81) verbleibt.
